# EUROPEAN PATENT SPECIFICATION

(11) **EP 1 962 355 B1**
(45) Date of publication and mention of the grant of the patent: **13.05.2009**
(21) Application number: 07121294.8
(22) Date of filing: 22.11.2007
(51) Int. Cl.: H01M 2/04, H01M 10/42

(54) **Electrolyte condensation system for lead-acid batteries**
Elektrolyt-Kondensation für Bleibatterien
Système de condensation électrolyte pour batteries d'acide de plomb

(43) Date of publication of application: 27.08.2008
(73) Proprietor: Exide Technologies S.A., 19200 Azuqueca Guadalajara (ES)
(72) Inventor: Trinidad López, Francisco, 28804 Madrid (ES); Collado Parra, Ernesto, 28047 Madrid (ES); Gutiérrez Heredia, Jesús, 50009 Zaragoza (ES); Valenciano Martínez, Jesús, 28801 Madrid (ES)
(74) Representative: Elzaburu Marquez, Alberto

(56) References cited:
- US-A- 4 286 028
- US-A- 4 778 735
- US-A- 5 702 841
- US-A- 5 843 593

## Description

### 1. Field of the invention

The present invention relates to an electrolyte condensation system for lead-acid batteries comprising means for condensing evaporated electrolyte and means for returning said evaporated electrolyte to the electrochemical cells.

### 2. Background

The present invention is related to lead-acid accumulators used for vehicle starting, lighting and ignition, as well as other applications such as the storage and supply of electrical energy in various vehicles (boats, etc.), having as a common characteristic use at high temperatures

One of the main disadvantages of lead-acid batteries is the need to add water frequently. In normal conditions, the amount of water loss is very small, thereby allowing modern batteries to be sealed, so that during a period of 3-5 years they do not need any added water.

However, the situation is completely different when the operating environment temperature of the batteries is very high, because the loss of electrolyte due to evaporation must be added to the loss of electrolyte due to circulation of the charging current (causing electrolysis of the water). Evaporation losses can be as high as, or even be higher than, electrolysis losses.

When the operating environment temperature is higher than 60°C, the use of sealed batteries is not advisable, since water evaporation losses may significantly reduce battery life. In this case, vented batteries having openings for refilling electrolyte and vent plugs to avoid spillage of electrolyte should be used. This kind of battery is not completely sealed, and the likelihood of electrolyte spillage is very high. Therefore, they should always be kept in a substantially upright position, since an inclination of more than 45°C may cause spillage of the sulphuric acid-containing electrolyte.

In the prior art, different devices to reduce electrolyte losses by evaporation in lead-acid batteries are known. For instance, US 5,702,841 discloses a lead-acid battery comprising an electrolyte venting system with tubular splash guards and a plurality of baffles defining a circuitous passageway for gases which develop in the cells of the battery. However, in this case the gases are released to an external port located on a secondary cover.

US 4,778,735 discloses a vent cap for a storage battery in which the vent cap has a cover and a base, defining a hollow enclosure. A condensation chamber is defined within the hollow enclosure above each cell port to trap and condense battery acid contained in the gases venting from the battery cell.

Finally, EP 0 858 116 B1 discloses a leak resistant battery cover for storage batteries. The battery cover provides a labyrinth of passages which provide a path from each cell vent to the atmospheric vent. The labyrinth configuration prevents electrolyte from reaching the atmospheric vent and spilling out of the battery.

However, in all the cited documents a portion of the evaporated electrolyte is lost anyway due to the high temperatures attained by the battery, which do not facilitate the condensation of the electrolyte for return to the battery cells.

### 3. Summary of the invention

The problem to be solved by the present invention is therefore to improve the return rate of electrolyte evaporated by high operating environment temperatures to the battery cells, thereby reducing battery electrolyte losses.

The solution discovered by the inventors of the present invention is that by providing an electrolyte condensation system for returning the evaporated electrolyte to the cells, where the said system is substantially thermally insulated from the battery, said system attains much lower temperatures than the rest of the battery components under hot operating environment conditions, thereby facilitating condensation of the electrolyte in the said system and substantially avoiding evaporated electrolyte losses.

Accordingly, a first aspect of the invention relates to an electrolyte condensation system for lead-acid batteries comprising means for condensing evaporated electrolyte and means for returning said evaporated electrolyte to the electrochemical cells upon condensation, characterised in that the electrolyte condensation system is substantially thermally insulated from the battery.

A second aspect of the invention relates to a battery comprising the above-cited electrolyte condensation system.

### 4. Drawings

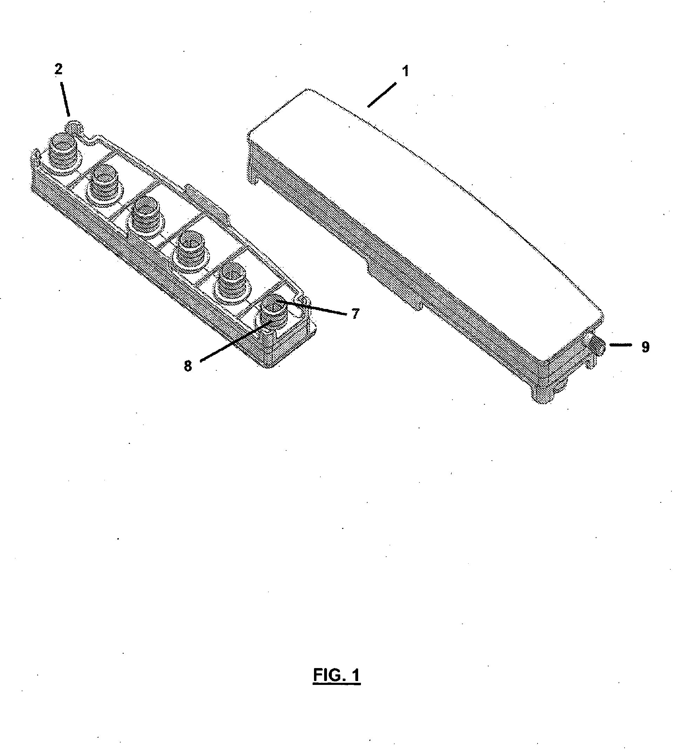

Fig. 1 shows a top view of the electrolyte condensation system for lead-acid batteries according to the invention. The electrolyte condenser preferably comprises two pieces, an upper part (1) and a lower part (2), which are joined together, preferably by thermal or ultrasonic welding, advantageously before the deploying the system in the battery.

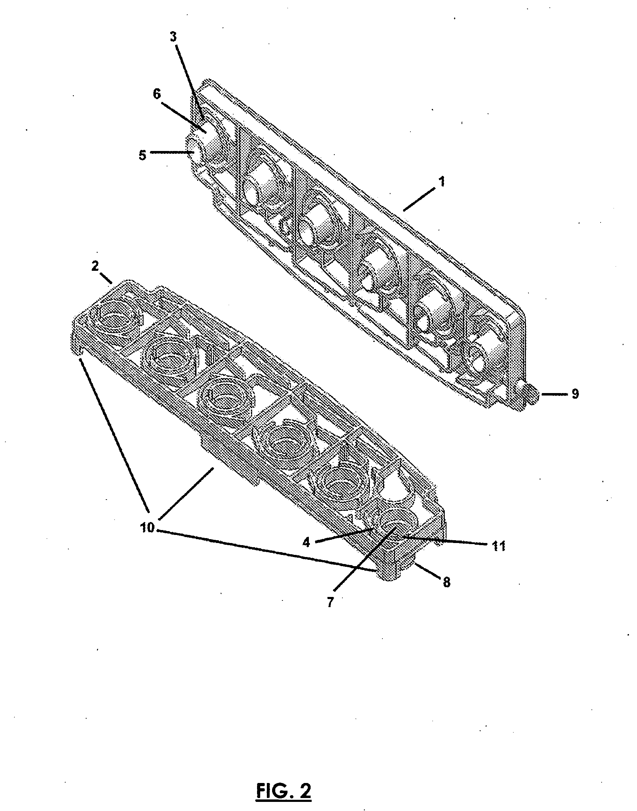

Fig. 2 shows a bottom view of both upper part (1) and lower part (2) of the electrolyte condensation system of the invention. The electrolyte condensation system of the invention comprises means for condensing the evaporated electrolyte, such as labyrinths (3, 4), and means for returning the condensed electrolyte to the battery cells, such as openings (7) surrounded by cylindrical walls (8) having an aperture (11) to allow the condensed electrolyte to return to the electrochemical cells.

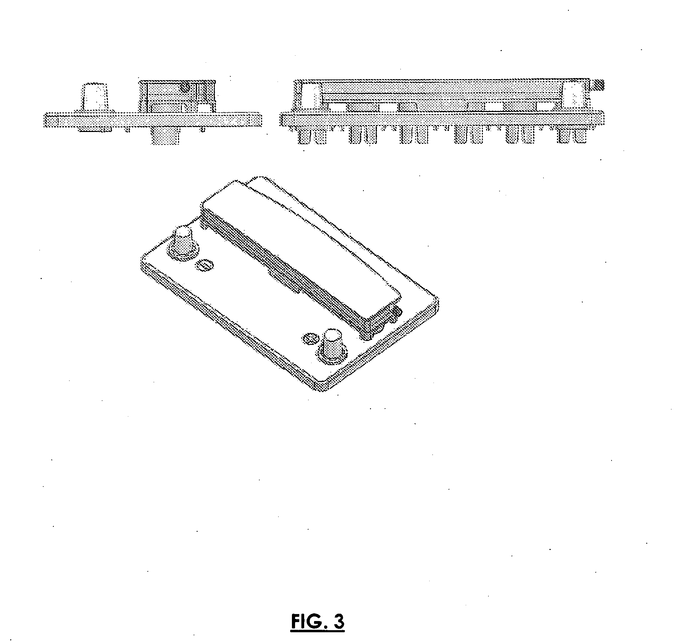

Fig. 3 shows two side views and a perspective view of the battery top when the electrolyte condenser of the invention has been inserted in the battery cover.

Embodiments of the present invention are described below by way of example only.

### 5. Detailed description of the invention

The electrolyte condensation system for lead-acid batteries of the invention comprises means for condensing evaporated electrolyte and means for returning said evaporated electrolyte to the electrochemical cells.

The electrolyte condensation system for lead-acid batteries of the invention comprises means for condensing evaporated electrolyte and means for returning said evaporated electrolyte to the electrochemical cells.

The electrolyte condenser for lead-acid batteries of the invention preferably comprises two parts, an upper part (1) and a lower part (2), which are joined together, preferably before being attached to the battery. Advantageously, the two pieces are thermally welded together, and the system is then deployed on the battery cover. In standard batteries, the battery cover contains an inlet -one per cell- for filling with electrolyte during initial charging (so-called "formation") of the battery. In known lead-acid batteries, once the electrolyte has been poured into the cells and the battery formed, the said inlets are closed by plastic plugs affixed to a common lid. The electrolyte condenser of the invention can thus be used as a substitute for the conventional plug-containing lid for closing off the filling inlets in the battery cover.

In a preferred embodiment of the invention for a six-cell lead-acid battery (see Fig. 2), the upper part (1) of the system comprises six openings (5), each being surrounded by a substantially cylindrical wall (6) and each cylindrical wall in turn being surrounded by a labyrinth (3) located on the inner surface of upper part (1). The openings (5) on this upper part (1) are blind, i.e., they do not traverse the wall of upper part (1). Lower part (2) comprises, again for a six-cell battery, a further six openings (7), each being surrounded by a substantially cylindrical wall (8) and each cylindrical wall in turn being surrounded by a labyrinth (4) located on the inner surface of lower part (2). In a preferred embodiment of the invention, cylindrical walls (6, 8) and labyrinths (3, 4) on the upper and lower part are arranged so as to match each other. In other words, the outer surfaces of cylindrical walls (6) are designed to match the inner surfaces of cylindrical walls (8). Also, labyrinths (3) on upper part (1) are designed to substantially match with labyrinths (4) on lower part (2). However, this is not essential, and there may be a gap between the two. Joining upper part (1) and lower part (2) of the electrolyte condensation system of the invention produces a hollow chamber between both parts provided for the purpose of venting any excess gases to the exterior through outlet vent (9).

Likewise, in a preferred embodiment of the invention both cylindrical walls (6) and (8) are present on upper part (1) and lower part (2) of the electrolyte condensation system of the invention. However, alternative embodiments of the invention might not be provided with cylindrical walls (6), since they are not essential either to condense the evaporated electrolyte or to return the condensed electrolyte to the electrochemical cells.

This arrangement of openings (5, 7), cylindrical walls (6, 8) and labyrinths (3, 4) constitutes the preferred embodiment of the invention for condensing evaporated electrolyte. However, alternative condensing means could be used as long as they perform the same function, i.e., the electrolyte previously evaporating from the electrochemical cells is condensed on them for return to the cells.

In a preferred embodiment of the invention, the means for returning the condensed electrolyte to the electrochemical cells comprise labyrinth (4) on lower part (2) in addition to cylindrical wall (8) surrounding opening (7) and an aperture (11) in said cylindrical wall (8) to allow the condensed electrolyte to return to the battery cell. In other words, the evaporated electrolyte is condensed within labyrinths (3, 4) and led back to opening (7) through aperture (11) in cylindrical wall (8). The condensed electrolyte then flows through aperture (11) and returns to the electrolyte cell located just beneath wall (8).

The above variants have been described in relation to a preferred embodiment of the invention, where the lead-acid battery is a six-cell battery. However, where there is a different number of cells, the number of openings (5, 7), walls (6, 8) and labyrinths (3, 4) may be altered in line with the number of battery cells.

Thermal insulation of the electrolyte condenser of the invention with respect to the rest of the battery is achieved by means of some small projections (10). Projections (10) also serve the function of securing the condenser of the invention to the battery and have a sufficiently small section so as to avoid substantial thermal transfer between the electrolyte condenser and the rest of the battery. Moreover, the configuration of the small projections on the electrolyte condenser provides an air chamber between the bottom wall of the electrolyte condenser and the top of the battery cover. This arrangement causes the electrolyte condenser of the invention to be substantially thermally insulated from the rest of the battery, so that, when the battery is placed in a hot operating environment, the temperature of the electrolyte condenser will be substantially lower than that of the other battery components.

In a preferred embodiment of the invention, projections (10) are located below each corner of lower part (2). In other preferred embodiments of the invention, two additional projections are provided near the mid-points on the edges of lower part (2). However, any number and arrangement of projections may be present as long as their function (to allow the condenser of the invention to be substantially insulated thermally from the battery while allowing secure attachment of the condenser to the battery cover) is achieved.

When the battery reaches high temperatures (e.g., T₁ > 60°C), for instance, when it is placed in the engine compartment of a motor vehicle, the electrolyte condenser of the invention attains a lower temperature (T₂ < 60° C) thanks to its thermal insulation from the other battery components. This facilitates condensation of battery gases and return of the condensed gases to the battery cells through labyrinths (3, 4) and openings (7) in lower part (2) of the electrolyte condenser. Electrolyte evaporation losses are thus substantially avoided in their entirety, since the higher the operating environment temperature (T₁), the higher the temperature gradient (T₁ - T₂) and the more effective condensation of the evaporated electrolyte. The evaporated electrolyte is condensed within labyrinths (3, 4) on upper part (1) and lower part (2) of the electrolyte condenser and is then returned to the battery cells through an aperture (see e.g. (11), only one aperture shown) in each cylindrical wall (8) surrounding each opening (7) on lower part (2).

In a preferred embodiment of the invention, the electrolyte condenser of the invention is made from polypropylene containing a variable amount of an elastomeric material compatible with polypropylene. This selection of materials advantageously provides a satisfactory fit between the electrolyte condenser of the invention and the battery's filling inlets.

In a preferred embodiment of the invention, the electrolyte condenser of the invention is made from polypropylene containing a variable amount of an elastomeric material compatible with polypropylene. This selection of materials advantageously provides a satisfactory fit between the electrolyte condenser of the invention and the battery's filling inlets.

The internal labyrinths inside the electrolyte condenser ensure that the battery is effectively sealed during handling and prevents spillage of the electrolyte when the battery is turned on its side (90°) or even turned completely upside down (180°).

Both electrical and mechanical tests have been performed on batteries comprising the electrolyte condenser of the invention to demonstrate the advantages of the invention. These tests have been carried out in accordance with the strictest requirements set by the main automobile manufacturers.

### 6. Examples

The electrolyte condenser of the invention has been tested in lead-acid batteries and compared with similar lead-acid batteries having conventional lids with plugs instead of the electrolyte condenser. The testing took into account the main electrical and mechanical requirements set by car manufacturers.

### 6.1. Preliminary tightness test

Battery tightness was first tested for all samples by applying 200 mbar pressure to the outlet vent for five minutes while the batteries were immersed in a water bath. Air was not observed to exit at any point. After this preliminary characterisation test, the test sequence shown in Table 1 was followed:

**Table 1. Test matrix**

| **Test** | **Sample no.** | | | | | | | | | | | | | | | | |
|---|---|---|---|---|---|---|---|---|---|---|---|---|---|---|---|---|---|
| | **1** | **2** | **3*** | **4** | **5** | **6*** | **7** | **8*** | **9** | **10** | **11** | **12** | **13** | **14** | **15** | **16** | **17** |
| | | | | | | | | | | | | | | | | | |
| **Capacity test** | X | X | X | X | X | X | X | X | | | | | | | | | |
| **Cold cranking test at -18°C** | X | X | X | X | X | X | X | X | | | | | | | | | |
| **Endurance corrosion** | X | X | X | | | | | | | | | | | | | | |
| **SAE J240 at 75°C** | | | | X | X | X | | | | | | | | | | | |
| **Water consumption** | | | | | | | X | X | | | | | | | | | |
| **Vibration** | | | | | | | | | X | X | | | | | | | |
| **Safety** | | | | | | | | | | | X | | | | | | |
| **Pressure overcharge** | | | | | | | | | | | | X | X | | | | |
| **Electrolyte retention** | | | | | | | | | | | | | | X | | | |
| **Vent cap leakage** | | | | | | | | | | | | | | | X | | |
| **Thermal shock** | | | | | | | | | | | | | | | | X | X |
| **Impact** | | | | | | | | | | | | | | | | X | X |
| **Teardown** | | X | X | X | | X | | | | | | | | | | | |

| | | | | | | | | | | | | | | | | | |
|---|---|---|---|---|---|---|---|---|---|---|---|---|---|---|---|---|---|
| * These batteries were tested with the standard lid and plugs for purposes of comparison. | | | | | | | | | | | | | | | | | |

### 6.2. Electrical tests

Eight sample lead-acid batteries were subjected to a series of selected electrical tests in order to compare batteries with lids having standard plugs and batteries equipped with the electrolyte condenser of the invention. These tests were mainly focused on studying battery water loss (evaporation) at high temperatures, namely, endurance-corrosion, high temperature-lifetime test (SAE J240) and water consumption. Before testing, the batteries were subjected to the customary initial characterisation tests, i.e., capacity and cold cranking.

### 6.2.1. Capacity (EN 50342)

Batteries 1-8 were discharged at a constant current of Cn/20 down to 10.5 V at a temperature of 25°C. All the capacities recorded were well above the nominal value ratings (Table 2).

### 6.2.2. Cold cranking test at -18°C (EN 50342)

The above batteries were recharged and subjected to a cranking performance test according to the EN standard. As shown in Table 2, all the samples passed this low-temperature test.

**Table 2. Initial characterisation tests**

| **Sample no.** | | **1** | **2** | **3** | **4** | **5** | **6** | **7** | **8** | **Required** |
|---|---|---|---|---|---|---|---|---|---|---|
| ***Capacity test (Ah)*** | | 49.9 | 50.0 | 49.4 | 50.3 | 50.5 | 49.3 | 48.9 | 48.9 | 43 |
| ***Cold cranking at-18°C (390 A)*** | **V (10 s)** | 8.31 | 8.29 | 8.26 | 8.30 | 8.27 | 8.27 | 8.52 | 8.44 | ≥7.5 V |
| | **Time to 6 V (s)** | 153 | 163 | 150 | 162 | 158 | 154 | 152 | 156 | ≥90 s |

### 6.2.3. Endurance-corrosion

This test was performed in a water bath heated to 75°C. No water was allowed to be added. Weight loss at the end of each test unit was recorded in order to gain insight into the behaviour of both types of battery at this temperature.

### Test sequence:

1) The batteries were stored under open circuit conditions at 75°C for seven days and then subjected to a 30-second discharge with the nominal cold cranking current at 75°C. Voltage after 30 seconds should not be less than 9.0 V.
2) The batteries were continuously overcharged at 14.0 V for seven days.

The above test steps 1 and 2 in sequence made up one test unit.

**Table 3. Endurance-corrosion results**

| **Sample no.** | **1** **(electrolyte condenser)** | **2** **(electrolyte condenser)** | **3** **(plugs)** |
|---|---|---|---|
| ***Unit 1*** | | | |
| ***Cranking at 75°C (390 A)*** | | | |
| **V(30s)>9V** | 9.63 | 9.65 | 9.70 |
| **Weight loss (g)** | 69 | 73 | 94 |
| ***Unit 2*** | | | |
| ***Cranking at 75°C (390 A)*** | | | |
| **V(30s)>9V** | 9.38 | 9.49 | 9.56 |
| **Weight loss (g)** | 95 | 101 | 289 |
| ***Unit 3*** | | | |
| ***Cranking at 75°C (390 A)*** | | | |
| **V(30s)>9V** | 9.11 | 9.19 | 9.21 |
| **Weight loss (g)** | 126 | 126 | 273 |
| **Cumulative weight loss* (g)** | **290** | **300** | **656** |
| | | **Teardown** | **Teardown** |
| ***Unit 4*** | | | |
| ***Cranking at 75°C (390 A)*** | | | |
| **V(30s)>9V** | 8.57 | | |
| **Weight loss (g)** | 93 | | |
| ***Unit 5*** | | | |
| ***Cranking at 75°C (390 A)*** | | | |
| **V(30s)>9V** | 7.86 | | |
| **Weight loss (g)** | 236 | | |
| **Total weight loss (g)** | **619** | | **656** |

| | | | |
|---|---|---|---|
| * The cumulative weight loss recorded at the end of unit 3 has been taken for purposes of comparison. | | | |

At the end of corrosion unit 3, the observed weight loss in the batteries that were equipped with the electrolyte condenser of the invention was less than half the weight loss in the batteries that were equipped with the standard lid and plugs. Batteries nos. 2 and 3 were then opened for comparative teardown analysis.

### Teardown analysis:

A battery having each type of battery closure was opened after this corrosion test, and the findings are summarised below.

In the battery provided with the electrolyte condenser, upon removal of the lid, the electrolyte level was found to be above the tops of the plates in all the cells. This is consistent with the lower water loss observed for this sample. Also, both the positive and negative plates were typical in appearance after the corrosion test, i.e., the positive plates exhibited plate growth and high corrosion, while the negative plates were in relatively good condition.

In the battery with the standard lid and plugs, the electrolyte level was found to be far below the tops of the plates. Higher corrosion was present on the positive plates than was observable in the battery that had the electrolyte condenser. Severe grid growth was also measured on the positive grids.

The negative plates remained in relatively good condition. Compared to sample no. 2, the failure mode of battery no. 3 can be attributed to the severe corrosion of the positive grids and also to the higher water loss that occurred during the endurance test at 75°C.

### 6.2.4. SAE J240 test

Three batteries (one having the conventional lid and plugs) were subjected to this cycle life test at high temperature. During this test, the battery may not be refilled with water. The battery is placed in a water bath at 75°C and subjected to 425 discharge and charge cycles in the following sequence:

### Test sequence:

1) The battery was discharged at 25 A for four minutes.
2) The battery was charged at 14.8 V for 10 minutes, with Iₘₐₓ = 25 A.

The sequence of 425 discharge and charge cycles followed by a rest period of 60 hours has been designated a test unit. After each test unit, the battery was subjected to a cranking test at 75°C with the nominal cold cranking current. The final voltage should be no less than 7.2 V after 30 seconds.

**Table 4. SAE J240 at 75°C**

| **Sample no.** | **4** **(electrolyte condenser)** | **5** **(electrolyte condenser)** | **6** **(plugs)** |
|---|---|---|---|
| ***Unit 1* (*425 cycles)*** | | | |
| ***Cranking at 75°C* (*390 A*)** | | | |
| **V(30s)>7.2V** | 9.85 | 9.80 | 9.80 |
| **Weight loss (g)** | 77 | 69 | 77 |
| ***Unit* 2 *(425 cycles)*** | | | |
| ***Cranking at 75°C* (390 A)** | | | |
| **V(30s)>7.2V** | 9.51 | 9.50 | 9.47 |
| **Weight loss (g)** | 56 | 55 | 192 |
| ***Unit* 3 *(425 cycles)*** | | | |
| ***Cranking at 75°C* (390 A)** | | | |
| **V(30s)>7.2V** | 9.11 | 8.86 | 8.93 |
| **Weight loss (g)** | 55 | 53 | 239 |
| ***Unit* 4 *(425 cycles)*** | | | |
| ***Cranking at 75°C* (*390 A*)** | | | |
| **V(30s)>7.2V** | 8.17 | 8.24 | 4.08 |
| **Weight loss (g)** | 55 | 54 | 196 |
| **Cumulative weight loss* (g)** | **243** | **231** | **704** |
| ***Unit* 5 *(425 cycles)*** | | | |
| ***Cranking at 75°C* (390 A)** | | | |
| **V(30s)>7.2V** | 3.82 | 4.21 | - |
| **Weight loss (g)** | 62 | 57 | - |
| **Total weight loss* (g)** | **305** | **288** | **704** |

| | | | |
|---|---|---|---|
| * The cumulative weight loss recorded at the end of unit 4 has been taken for purposes of comparison. | | | |

Table 4 again demonstrates the effectiveness of the electrolyte condenser during high temperature testing, here reducing evaporation losses by about 65% as compared to the battery with the standard lid and plugs. Additionally, the batteries with the electrolyte condenser of the invention consumed only one-third the amount of water consumed by the battery with the standard lid and plugs.

### Teardown analysis:

A battery with and a battery without the electrolyte condensation system of the invention were opened after this corrosion test, and the findings are summarised below.

The electrolyte level in the battery with the electrolyte condenser of the invention was again found to be above the tops of the plates in all the cells, consistent with the lower water loss observed for the batteries with the electrolyte condenser at elevated temperatures. The positive plates were in relatively good condition, although some softening of the positive active material (PAM) was found. The negative plates displayed shrinkage of the negative active material (NAM), the main failure mode for this type of test profile.

The electrolyte level in the battery with the standard lid and plugs was far below the tops of the plates. The positive and negative plates had the same general appearance as in the battery with the new electrolyte condenser of the invention, i.e., some grid growth and softening of the PAM.

Failure mode in the conditions of this test can again be attributed to shrinkage of the NAM.

### 6.2.5. Water consumption

Six sample batteries (type 7), each equipped with the electrolyte condenser of the invention, and six control batteries (type 8), each with the conventional lid and plugs, were subjected to a water consumption test at three different temperatures. Accordingly, two of each type of battery were placed in water baths at, respectively, 40°C, 60°C and 75°C and tested as follows:

The batteries were charged at a constant voltage of 14.40 V for 21 days without adding water. The batteries were then Immediately cleaned, dried and weighed. Water consumption was measured as weight loss as shown in Table 5.

**Table 5: Water consumption test results (weight loss)**

| Battery temperature | Electrolyte condenser (g) | Electrolyte condenser (g) | Standard plugs (g) | Standard plugs (g) |
|---|---|---|---|---|
| 40°C | 6 | 8 | 8 | 7 |
| 60°C | 25 | 27 | 32 | 30 |
| 75°C | 82 | 85 | **160** | **165** |

The batteries equipped with the electrolyte condenser of the invention exhibited lower rates of water consumption, particularly at the temperature above 60°C.

### 6.2.6. Vibration test

Batteries nos. 9 and 10 were subjected to the vibration test. Table 6 sets out a brief description of the test as well as the main test results. The batteries were rigidly fastened to the vibration table and subjected to vertical sinusoidal vibration for two hours.

**Table 6. Vibration test results**

| **Test** | **Sample no.** | | **Requirement** |
|---|---|---|---|
| | **9** | **10** | |
| **Initial discharge at 0.6 Icc (234A) to 7.2 V (s)** | 219 | 219 | |
| **Initial discharge at 0.6 Icc (234A) to 6 V (s)** | 224 | 224 | |
| **Vibration at 30 Hz (3G) for 2 hours** | O.K. **(no acid leakage)** | O.K. **(no acid leakage)** | |
| **Final discharge at 0.6 Icc (60 s)** | 10.71 | 10.70 | ≥7.2 V |

Thus, both batteries fulfilled the test requirements.

### 6.3. Mechanical tests

### 6.3.1. Safety test

### Test sequence:

1) The fully charged battery was subjected to an additional charge of 2.4 A for six hours.
2) The battery was then placed in a protecting chamber and charged at 10 A to produce a powerful gassing effect. Charging was continued for between three and five minutes to stabilise gas flow before the test started.
3) A spark of at least 0.02 mJ was produced at a distance of 10 mm from the battery outlet vent. The spark was repeated at 10-second intervals at least six times per battery vent.
4) The battery should not explode, nor should there be any flashback into the battery from the external spark source.

### Test results:

Battery no. 11 was subjected to this test. Visual inspection and video recording of the battery were carried out throughout the procedure. Neither explosions nor flashback into the assembly occurred after the spark sequence.

### 6.3.2. Pressure overcharge test

Two batteries (nos. 12 and 13) were tested under extreme overcharge conditions. One battery was subjected to a maximum current of 70 A (according to car manufacturers' specifications for batteries with a nominal capacity of less than 45 Ah). The other underwent the more rigorous conditions of a final current of 100 A. Both procedures are detailed below.

### Test sequence:

1) A previously charged battery was overcharged at a constant current of 10 A.
2) The current was increased by 10 A every minute to a maximum of 100 A (70 A for batteries with a nominal capacity of less than 45 Ah).
3) The battery was charged uninterruptedly at 100 A (70 A for batteries with a nominal capacity of less than 45 Ah) for 10 minutes.
4) No acid should leak out of the battery. The maximum pressure build-up should not exceed 200 mbar.

### Test results:

A piece of pH indicator paper was placed next to the gas exhaust outlet vent of the electrolyte condenser, since acid could leak out through the vent during the test. Pressure inside the battery assembly was measured continuously using a manometer through a hole drilled into the cover.

The maximum pressure build-up in battery no. 12 was 48 mbar, and no electrolyte leakage was observed. Therefore, this battery satisfied the test requirements for a 43 Ah battery, i.e., overcharging up to 70 A.

Some acid-containing water was observed to have leaked out of battery no. 13 due to the high temperature produced by overcharging during the final 100-A step. However, the maximum pressure measured was well below the permitted 200 mbar (Table 7).

**Table 7. Pressure build-up**

| **Battery** | **Maximum current** **(A)** | **Pressure build-up** **(mbar)** | **Requirement** |
|---|---|---|---|
| **12** | 70 A | 48 | < 200 mbar |
| **13** | 100 A | 35 | < 200 mbar |

### 6.3.3. Electrolyte retention test

Battery no. 14, equipped with the electrolyte condenser of the invention, was subjected to the electrolyte retention test. A brief description of the test and the main results obtained are summarised in Table 8. The results show that the battery met the test requirements.

**Table 8. Electrolyte retention test results**

| | **Lead-acid battery** | | **Requirement** |
|---|---|---|---|
| *Vibration at 25°C for 15 min, 32-35 Hz, 5 G, tilted 30° along both the long and the short axis* | | | |
| Long axis | **O.K.** | **O.K.** | No leakage No damage |
| Short axis | **O.K.** | **O.K.** | No leakage No damage |

### 6.3.4. Vent cap leakage test

### Test sequence:

1) The outlets intended to vent internal gases were completely sealed by means of epoxy or another suitable material without disturbing the vent cap/cover integrity of the battery assembly.
2) The battery assembly was placed on its side with the connector posts downwards.
3) A 5-mm hole was drilled into each cell cavity to relieve internal vacuum.
4) The battery assembly underwent a 5-hour test period.
5) There should be no visual leakage of electrolyte during the test period.

### Test results:

Battery no. 15 was subjected to the vent cap leakage test.

Table 9 summarises the main test results. No leakage was observed, and hence the battery fulfilled the test requirements.

**Table 9. Vent cap leakage test results**

| | **Lead-acid battery** | | **Requirement** |
|---|---|---|---|
| *Battery on its side with connector posts downwards* + *hole (5 mm) in each cell cavity* + *5-h test period* | | | |
| Result | **O.K.** | **O.K.** | No leakage |

### 6.3.5. Thermal shock test

Batteries nos. 16 and 17, in which the conventional lid was replaced by the electrolyte condenser of the invention, were subjected to a thermal stress test, as follows:

### Test sequence:

The battery was placed in a thermal shock chamber and held at a stabilised temperature of -30°C for 16 hours. The battery was then placed in a heating chamber and held at a stabilised temperature of 85°C for five hours.

After five hours, the battery was removed from the heating chamber and allowed to stand at room temperature for three hours.

This completed the cycle. The test consisted of a total of 10 cycles. At the end of the first cycle the battery was subjected to an air pressure test of 14 kPa.

After conditioning the battery to 23°C, the sample was evaluated. No cracks are allowed.

### Test results:

No cracks were detected in either sample upon completion of the 10 cold/hot cycles.

### 6.3.6. Impact test

This test was conducted on batteries nos. 16 and 17 after the thermal shock test.

The batteries were emptied of acid and cooled to -30°C. A 900-g steel ball was dropped on all the possible weak points of the lid from a height of 50 mm. No cracks are allowed.

### Test results:

After dropping the ball on the selected locations on the electrolyte condenser, neither cracks nor defects were detectable anywhere on the manifold.

### 7. Conclusions

All the batteries equipped with the electrolyte condenser of the invention successfully fulfilled all of the main electrical and mechanical requirements under original equipment specifications. Additionally, they displayed outstanding behaviour during high-temperature tests by substantially reducing the water lost to evaporation.

Consequently, batteries provided with the electrolyte condenser of the invention meet all the requirements demanded of a maintenance-free lead-acid battery while affording the additional advantage of substantially reducing water consumption due to evaporation at high temperatures, thereby increasing battery life under high-temperature conditions.

## Claims

1. Electrolyte condensation system for lead-acid batteries comprising means for condensing electrolyte evaporated from a battery connectable to the electrolyte condensation system and means for returning said electrolyte to the battery, **characterised in that** the electrolyte condensation system is attachable to the battery by means of at least one projection (10), thereby substantially thermally insulating the electrolyte condensation system from the battery.̅

2. Electrolyte condensation system according to claim 1, wherein the system comprises an upper part (1) and a lower part (2).

3. Electrolyte condensation system according to claim 2, wherein upper part (1) and lower part (2) are thermally or ultrasonically welded together.

4. Electrolyte condensation system according to any preceding claim, wherein the means for condensing evaporated electrolyte comprise at least one labyrinth (3, 4) on at least one of upper part (1) and lower part (2).

5. Electrolyte condensation system according to claim 4, wherein the means for condensing evaporated electrolyte comprise at least one labyrinth (3) on upper part (1) and at least one labyrinth (4) on lower part (2).

6. Electrolyte condensation system according to any preceding claim, wherein the means for returning the evaporated electrolyte to the electrochemical cells comprise at least one opening (7) per battery cell on lower part (2) of the electrolyte condensation system.

7. Electrolyte condensation system according to claim 6, wherein the at least one opening (7) is surrounded by a first substantially cylindrical wall (8).

8. Electrolyte condensation system according to claim 7, wherein an aperture (11) is provided on the first substantially cylindrical wall (8) to allow the condensed electrolyte to return to the electrochemical cell.

9. Electrolyte condensation system according to any preceding claim, wherein the electrolyte condensation system is made of polypropylene containing a variable amount of an elastomeric material compatible with polypropylene.

10. Electrolyte condensation system according to any preceding claim, wherein the system further comprises at least one blind opening (5) surrounded by a second substantially cylindrical wall (6) and a labyrinth (3).

11. Electrolyte condensation system according to any preceding claim, wherein there are four projections (10), one provided below each of the corners of lower part (2).

12. Electrolyte condensation system according to any preceding claims , wherein at least two additional projections are provided around the mid-point along the edge of lower part (2).

13. Electrolyte condensation system according to any preceding claim, wherein an air chamber is provided between the bottom part of the electrolyte condensation system and the top part of the battery.

14. Lead-acid battery comprising an electrolyte condensation system according to any of the previous claims.

## Patentansprüche

1. Elektrolytkondensationssystem für Bleisäurebatterien aufweisend eine Vorrichtung zum Kondensieren von von einer mit dem Elektrolytkondensationssystem verbindbaren Batterie verdunsteten Elektrolyts und eine Vorrichtung zum Zurückführen des Elektrolyts zu der Batterie,
**dadurch gekennzeichnet, dass**
das Elektrolytkondensationssystem mit der Batterie mittels eines Vorsprungs (10) verbindbar ist, und **dadurch** im Wesentlichen das Elektrolytkondensationssystem von der Batterie thermisch isoliert.

2. Elektrolytkondensationssystem nach Anspruch 1, bei dem das System einen oberen Teil (1) und einen unteren Teil (2) aufweist.

3. Elektrolytkondensationssystem nach Anspruch 2, bei dem ein oberer Teil (1) und ein unterer Teil (2) thermisch oder ultraschall verschweißt ist.

4. Elektrolytkondensationssystem nach einem der vorhergehenden Ansprüche, bei dem die Vorrichtung zum Kondensieren verdunsteten Elektrolyts auf einem oberen Teil (1) und/oder einem unteren Teil (2) mindestens ein Labyrinth (3, 4) aufweist.

5. Elektrolytkondensationssystem nach Anspruch 4, bei dem die Vorrichtung zum Kondensieren verdunsteten Elektrolyts mindestens ein Labyrinth (3) auf einem oberen Teil (1) und mindestens ein Labyrinth (4) auf einem unteren Teil (2) aufweist.

6. Elektrolytkondensationssystem nach einem der vorhergehenden Ansprüche, bei dem die Vorrichtung zum Zurückführen des verdunsteten Elektrolyts zu den elektrochemischen Zellen auf dem unteren Teil (2) des Elektrolytkondensationssystems mindestens eine Öffnung (7) pro Batteriezelle aufweist.

7. Elektrolytkondensationssystem nach Anspruch 6, bei dem die mindestens eine Öffnung (7) von einer ersten im Wesentlichen zylindrischen Wandung (8) umschlossen ist.

8. Elektrolytkondensationssystem nach Anspruch 7, bei dem eine Öffnung (11) auf der ersten im Wesentlichen zylindrischen Wandung (8) vorgesehen ist, um es dem kondensierten Elektrolyt zu ermöglichen, zu der elektrochemischen Zelle zurückzukehren.

9. Elektrolytkondensationssystem nach einem der vorhergehenden Ansprüche, bei dem das Elektrolytkondensationssystem aus Polypropylen mit einem variablen Anteil an elastomerem, mit Polypropylen kompatiblem Material hergestellt ist.

10. Elektrolytkondensationssystem nach einem der vorhergehenden Ansprüche, bei dem das System ferner mindestens eine blinde Öffnung (5) aufweist, die von einer zweiten im Wesentlichen zylindrischen Wandung (6) und einem Labyrinth (3) umgeben ist.

11. Elektrolytkondensationssystem nach einem der vorhergehenden Ansprüche, bei dem vier Vorsprünge (10) vorhanden sind, wobei jeweils einer unterhalb jeder Ecke des unteren Teils (2) ausgebildet ist.

12. Elektrolytkondensationssystem nach einem der vorhergehenden Ansprüche, bei dem mindestens zwei weitere Vorsprünge um den Mittelpunkt, entlang des Randes des unteren Teils (2) ausgebildet sind.

13. Elektrolytkondensationssystem nach einem der vorhergehenden Ansprüche, bei dem eine Luftkammer zwischen dem Unterteil des Elektrolytkondensationssystems und dem Oberteil der Batterie ausgebildet ist.

14. Bleisäurebatterie aufweisend ein Elektrolytkondensationssystem nach einem der vorhergehenden Ansprüche.

## Revendications

1. Système de condensation d'électrolyte pour batteries au plomb-acide, comprenant des moyens pour condenser un électrolyte évaporé d'une batterie pouvant être reliée au système de condensation d'électrolyte et des moyens pour renvoyer ledit électrolyte dans la batterie, **caractérisé en ce que** le système de condensation d'électrolyte peut être fixé à la batterie au moyen d'au moins une saillie (10), le système de condensation d'électrolyte étant ainsi sensiblement isolé thermiquement de la batterie.

2. Système de condensation d'électrolyte selon la revendication 1, dans lequel le système comprend une partie supérieure (1) et une partie inférieure (2').

3. Système de condensation d'électrolyte selon la revendication 2, dans lequel la partie supérieure (1) et la partie inférieure (2) sont soudées l'une à l'autre thermiquement ou par ultrasons.

4. Système de condensation d'électrolyte selon l'une quelconque des revendications précédentes, dans lequel les moyens pour condenser l'électrolyte évaporé comprennent au moins un labyrinthe (3, 4) sur au moins soit la partie supérieure (1), soit la partie inférieure (2).

5. Système de condensation d'électrolyte selon la revendication 4, dans lequel les moyens pour condenser l'électrolyte évaporé comprennent au moins un labyrinthe (3) sur la partie supérieure (1) et au moins un labyrinthe (4) sur la partie inférieure (2).

6. Système de condensation d'électrolyte selon l'une quelconque des revendications précédentes, dans lequel les moyens pour renvoyer l'électrolyte évaporé dans les cellules électrochimiques comprennent au moins un orifice (7) par cellule de batterie sur la partie inférieure (2) du système de condensation d'électrolyte.

7. Système de condensation d'électrolyte selon la revendication 6, dans lequel l'au moins un orifice (7) est entouré par une première paroi sensiblement cylindrique (8).

8. Système de condensation d'électrolyte selon la revendication 7, dans lequel une ouverture (11) est prévue sur la première paroi sensiblement cylindrique (8) pour permettre à l'électrolyte condensé de retourner dans la cellule électrochimique.

9. Système de condensation d'électrolyte selon l'une quelconque des revendications précédentes, dans lequel le système de condensation d'électrolyte est réalisé dans un polypropylène contenant une quantité variable d'un matériau élastomère compatible avec le polypropylène.

10. Système de condensation d'électrolyte selon l'une quelconque des revendications précédentes, dans lequel le système comprend en outre au moins un orifice borgne (5) entouré par une seconde paroi sensiblement cylindrique (6) et un labyrinthe (3).

11. Système de condensation d'électrolyte selon l'une quelconque des revendications précédentes, dans lequel il existe quatre saillies (10), l'une prévue sous chacun des coins de la partie inférieure (2).

12. Système de condensation d'électrolyte selon l'une quelconque des revendications précédentes, dans lequel au moins deux saillies supplémentaires sont prévues autour du centre le long du bord de la partie inférieure (2).

13. Système de condensation d'électrolyte selon l'une quelconque des revendications précédentes, dans lequel une cloche à air est prévue entre la partie inférieure du système de condensation d'électrolyte et la partie supérieure de la batterie.

14. Batterie au plomb-acide comprenant un système de condensation d'électrolyte selon l'une quelconque des revendications précédentes.
